# EUROPÄISCHE PATENTSCHRIFT

(11) **EP 0 739 769 B1**
(45) Veröffentlichungstag und Bekanntmachung des Hinweises auf die Patenterteilung: **10.05.2000**
(21) Anmeldenummer: 96104115.9
(22) Anmeldetag: 15.03.1996
(51) Int. Cl.: B60J 5/04, B60R 13/02

(54) **Kraftfahrzeugtür**
Vehicle door
Porte de véhicule

(30) Priorität: 24.04.1995 DE 19514964
(43) Veröffentlichungstag der Anmeldung: 30.10.1996
(73) Patentinhaber: MAGNA EXTERIOR SYSTEMS GmbH, 63179 Obertshausen (DE)
(72) Erfinder: Baudisch, Andreas, Dipl.-Ing., 65760 Eschborn (DE); Mattutat, Manfred, Dipl.-Ing., 68526 Ladenburg (DE); Diehl, Peter, Dipl.-Ing., 63110 Rodgau (DE); Heim, Gunther, D-63110 Rodgau (DE)
(74) Vertreter: Kovac, Werner

(56) Entgegenhaltungen:
- EP-A- 0 208 188
- EP-A- 0 424 760
- DE-C- 3 613 978

## Beschreibung

Die Erfindung betrifft eine Kraftfahrzeugtür mit einem Grundkörper und jeweils einer innen- und außenseitigen Abdeckung.

Bei einer aus der DE-A-3613978 bekannten Kraftfahrzeugtür ist die durch ein Tür-Außenblech und einen damit verbundenen Türrahmen gebildete außenseitige Abdeckung im Bereich des fensterseitigen Umfangsrands über Gelenkverbindungen mit einem als Aggregateträger vorgesehenen Grundkörper gelenkig verbunden. Jeder dieser Gelenkverbindungen ist im Bodenbereich des Türrahmens eine Verstelleinrichtung zugeordnet, mittels derer der Aggregateträger relativ zu dem Türrahmen verstellt bzw. nachjustiert werden kann. Die Verstelleinrichtung umfaßt Stellschrauben zur Verbindung eines Umbuges der außenseitigen Abdeckung mit dem Aggregateträger. Damit wird zwar die Anpassung an die Fahrzeugkarosserie erleichtert, was jedoch feinfühlige Justierarbeiten erforderlich macht. Als weiterer Nachteil kommt hinzu, daß nicht sichergestellt ist, daß sich das äußere Türblatt insbesondere bei einem Seitenaufprall nicht löst.

Der Erfindung liegt die Aufgabe zugrunde, eine Kraftfahrzeugtür der eingangs erwähnten Art anzugeben, bei der die Abdekkungen leicht, schnell und kostengünstig montierbar bzw. austauschbar sind.

Diese Aufgabe wird erfindungsgemäß durch die Merkmale des Anspruchs 1 gelöst. Weitere besonders vorteilhafte Ausgestaltungen der Erfindung offenbaren die Unteransprüche.

Vorteilhafterweise ist es vorgesehen, die innenseitige Abdeckung mit dem dem Türschweller des entsprechenden Kraftfahrzeuges zugewandten Wandbereich des Umbuges der außenseitigen Abdeckung mit Hilfe von Clipsen, Spreiznieten, Schrauben, Klettverbindungen, einem Schaumkleber, Schnapphaken, Hinterhakungen, Schnappscharnieren, Rasthaken etc. zu verbinden.

Zur Montage des Türblattes wird zunächst, dieses in die fensterseitigen Randbereiche des Grundkörpers bzw. der innenseitigen Abdekkung eingefädelt und nach unten geschwenkt. Sodann werden das Türblatt und der Grundkörper bzw. die innenseitige Abdeckung mittels der vorstehend erwähnten Befestigungsmittel miteinander verbunden.

Bei einem Ausführungsbeispiel der Erfindung hat es sich bewährt, statt der vorstehend erwähnten Befestigungsmittel eine Einschubseele (Profilschiene) zu verwenden.

Weitere Einzelheiten und Vorteile der Erfindung ergeben sich aus den folgenden anhand von Figuren erläuterten Ausführungsbeispielen. Es zeigen:
- Fig.1: einen Querschnitt durch eine Kraftfahrzeugtür mit einer Rastverbindung zwischen Türblatt und innenseitiger Abdeckung im unteren Türbereich;
- Fig.2: ein Ausführungsbeispiel einer clipsartigen Verbindung zwischen Türblatt und der innenseitigen Abdeckung;
- Fig.3: ein Ausführungsbeispiel einer Verbindung zwischen Türblatt und der innenseitigen Abdeckung mittels Einschubseele;
- Fig.4: eine perspektivische Ansicht des in Fig.3 dargestellten Ausführungsbeispieles und
- Fig.5: eine Draufsicht auf ein schematisch dargestelltes Türblatt mit zusätzlichen Befestigungselementen.

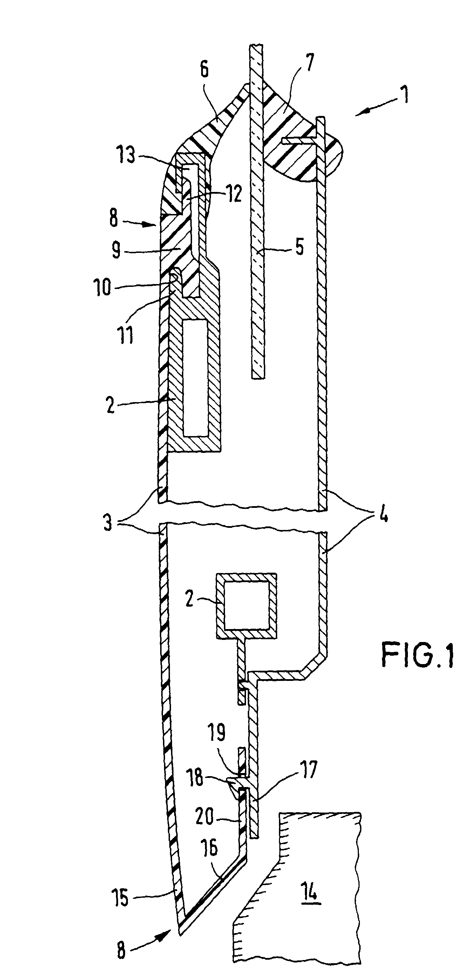

In Fig.1 ist mit 1 eine Kraftfahrzeugtür bezeichnet, die im wesentlichen aus einem nur teilweise dargestellten Grundkörper 2, z.B. einem Aluminiumprofil, einer außenseitigen Abdeckung (Türblatt) 3, z.B. aus Kunststoff, einer dem Fahrgastraum des Kraftfahrzeuges zugewandten innenseitigen Abdekkung 4 und einem Fenster 5 besteht. Zur Abdichtung des Fensters 5 sind gestrichelt dargestellte Gummidichtungen 6, 7 vorgesehen.

Der Umfangsrand 8 des Türblattes 3 weist auf seiner fensterseitigen (oberen) Seite 9 eine Hinterschneidung 10 auf, in die ein hakenförmiges Wandteil 11 des Grundkörpers 2 eingreift. Außerdem besitzt der Umfangsrand 8 auf der oberen Seite 9 eine stegförmige Verlängerung 12, die in eine U-förmige Hinterschneidung 13 des Grundkörpers 2 eingreift.

Auf seiner unteren, dem Türschweller 14 des Kraftfahrzeuges zugewandten Seite 15 ist der Umfangsrand 8 des Türblattes 3 mit einem Umbug 16 versehen. Das Türblatt 3 und die innenseitige Abdeckung 4 sind in diesem Bereich miteinander verbunden, wobei mehrere im unteren Bereich 17 der innenseitigen Abdeckung 4 angeordnete hakenförmige Raststifte 18 durch entsprechende Öffnungen 19 des dem Türschweller 14 zugewandten Wandbereiches 20 des Umbuges 16 ragen und den Wandbereich 20 hintergreifen.

Zur Montage des Türblattes 3 wird dieses zunächst auf ihrer oberen Seite 9 in die entsprechende Ausnehmung des Grundkörpers 2 eingefädelt. Anschließend wird dann das Türblatt zur Kraftfahrzeugtür 1 hingeschwenkt, bis die Raststifte 18 durch die Öffnungen 19 hindurchgedrückt sind und den Wandbereich 20 hintergreifen. Die gesamte Montage läßt sich außerordentlich schnell durchführen, ohne daß irgendwelche Spezialwerkzeuge erforderlich sind.

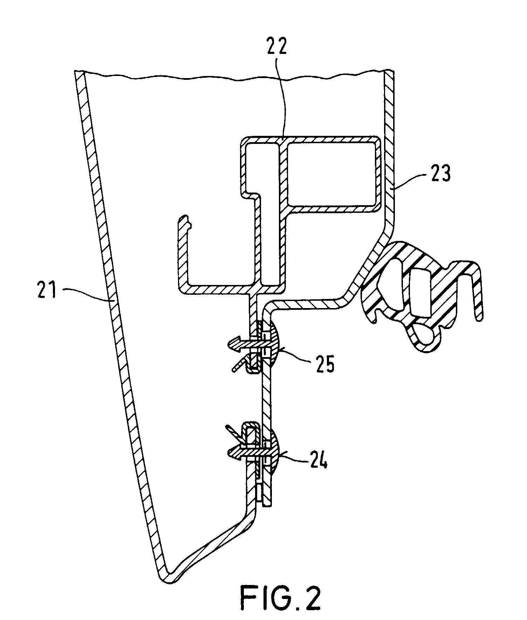

Fig.2 zeigt ein weiteres Ausführungsbeispiel einer Rastverbindung eines Türblattes mit dem Grundkörper einer Kraftfahrzeugtür. Dabei ist das Türblatt mit 21, der Grundkörper mit 22 und die innenseitige Abdeckung mit 23 bezeichnet. Die innenseitige Abdeckung 23 ist in diesem Fall an dem Türblatt 21 mit clipsartigen Verbindungselementen 24 verbunden. Über entsprechende Verbindungselemente 25 ist die innenseitige Abdeckung 23 ebenfalls an dem Grundkörper 22 befestigt.

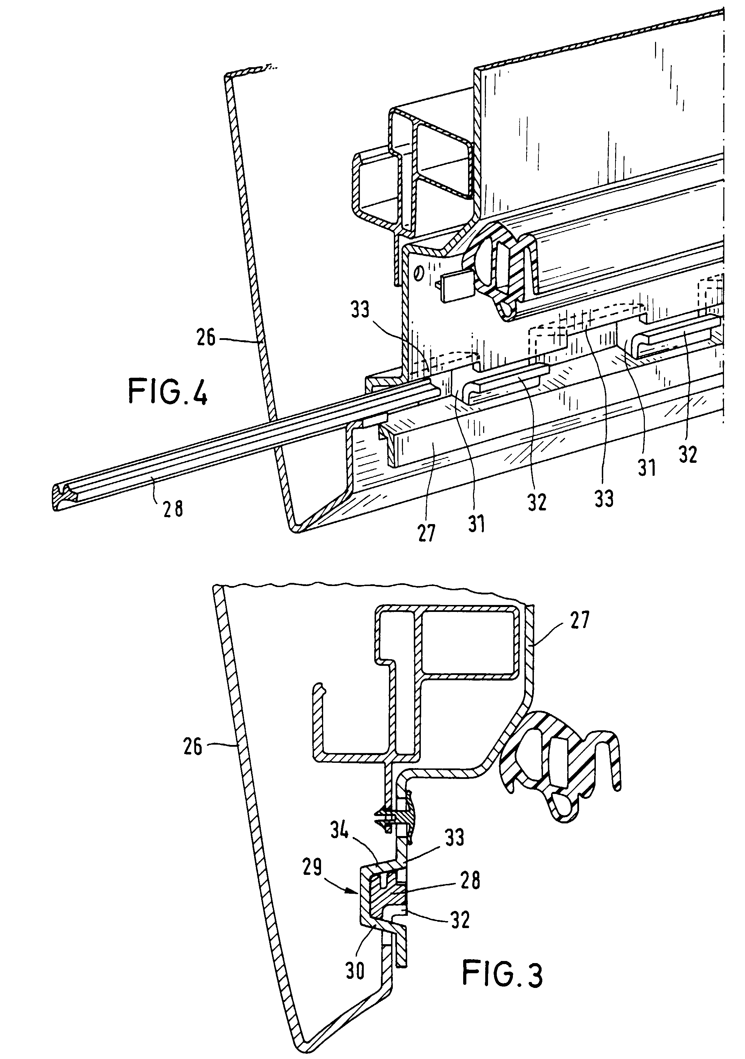

Die Fig.3 und 4 zeigen ein Ausführungsbeispiel der Erfindung, bei dem das Türblatt 26 mit der innenseitigen Abdeckung 27 über eine metallische Einschubseele (Profilschiene) 28 verbunden ist. Hierzu besitzt die innenseitige Abdeckung 27 auf ihrer dem Türblatt 26 zugewandten Seite eine Ausformung 29 mit im unteren Wandbereich 30 vorgesehenen Ausnehmungen 31 (Fig.4). Durch die Ausnehmungen 31 ragen die in diesem Bereich zum Türschweller (nicht dargestellt) hin gebogenen Randbereiche 32 des Türblattes 26 hindurch. Durch Einschieben der Profilschiene 28 in die Ausformung 29 werden das Türblatt 26 und die innenseitige Abdeckung 27 fixiert. Dabei stützt sich die Profilschiene 28 an stegförmigen Abstützelementen 33 ab, die im oberen Wandbereich 34 der Ausnehmungen 31 angeordnet sind.

Die Erfindung ist selbstverständlich nicht auf die vorstehend beschriebenen Ausführungsbeispiele beschränkt. So kann, je nach Aufbau der Kraftfahrzeugtür, die randseitige Befestigung des Türblattes auch nur an dem Grundkörper oder nur an der innenseitigen Abdeckung erfolgen.

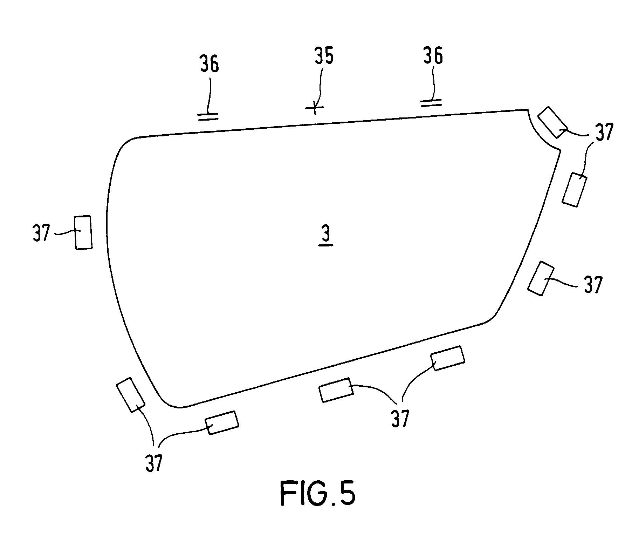

Um Ausgleichsbewegungen der Abdeckungen gegeneinander und gegenüber dem Grundkörper zuzulassen (z.B. zur Berücksichtigung der Wärmeausdehnung) sind entsprechende Toleranzen bei den Hinterschneidungen sowie bei den zusätzlichen Befestigungsmitteln (z.B. Verschraubung etc.) zu berücksichtigen. Ein entsprechendes Ausführungsbeispiel zeigt Fig.5. Dabei ist mit 3 wiederum das Türblatt bezeichnet, welches sich in der in Fig.1 dargestellten (eingeschwenkte und verrasteten) Position befindet. Mit 35 ist ein formschlüssiges Befestigungsmittel (z.B. ein Einschlagkeil) gekennzeichnet, welches in allen drei Richtungen als Festlager wirkt. Die mit 36 bezeichneten Befestigungsmittel, bei denen es sich um die durch das obere Ende des Grundkörpers 2 gebildete Schiene handelt, lassen in horizontaler Richtung (x-Achse) eine Verschiebung des Türblattes 3 zu und wirken daher in dieser Richtung als Schiebelager. In den dazu senkrechten Richtungen hingegen (y- und z-Achse) wirken die Befestigungsmittel 36 als Festlager. Die mit 37 bezeichneten Befestigungsmittel sind derart gewählt, daß sie in Richtung der x- und z-Achse als Schiebelager und in Richtung der y-Achse als Festlager wirken.

Das in Fig.3 dargestellte Befestigungsschema (Lagerprinzip) weist mehrere Vorteile auf: Einerseits ist ein Toleranzausgleich zur Türfuge vorhanden. Andererseits tritt kein Beulen des Türblattes 3 auf, weil ein spannungsfreier Ausgleich der Wärmedehnung vorhanden ist. Schließlich tritt eine Schlagabmilderung, z.B. bei einem Steinschlag, durch die Dämpfereigenschaften im Schiebesitz auf.

### Bezugszeichenliste

- 1: Kraftfahrzeugtür
- 2: Grundkörper
- 3: außenseitige Abdeckung, Türblatt
- 4: innenseitige Abdeckung
- 5: Fenster
- 6,7: Gummidichtungen
- 8: Umfangsrand des Türblattes
- 9: obere Seite des Türblattes
- 10: Hinterschneidung
- 11: hakenförmiges Wandteil
- 12: stegförmige Verlängerung
- 13: U-förmige Hinterschneidung
- 14: Türschweller
- 15: untere Seite des Türblattes
- 16: Umbug
- 17: untere Bereich
- 18: Raststift
- 19: Öffnung
- 20: Wandbereich

- 21: außenseitige Abdeckung, Türblatt
- 22: Grundkörper
- 23: innenseitige Abdeckung
- 24: clipsartiges Verbindungselement
- 25: Verbindungselement

- 26: außenseitige Abdeckung, Türblatt
- 27: innenseitige Abdeckung
- 28: Einschubseele, Profilschiene
- 29: Ausformung
- 30: untere Wandbereich
- 31: Ausnehmung
- 32: gebogener Randbereich
- 33: stegförmige Abstützelemente
- 34: obere Wandbereich
- 35: Befestigungsmittel, Einschlagkeil, Festlager
- 36,37: Befestigungsmittel, Schiebe- bzw. Festlager

## Patentansprüche

1. Kraftfahrzeugtür mit einem Grundkörper (2;22) und jeweils einer innen- und einer außenseitigen Abdekkung (4,3;23,21;27,26), wobei
a) der fensterseitige Umfangsrand (8) der außenseitigen Abdeckung (3;21;26) mindestens teilweise eine Hinterschneidung (10) aufweist, in die ein hakenförmiges Wandteil (11) des Grundkörpers (2) eingreift,
b) der Umfangsrand (8) an seiner oberen Seite (9) eine stegförmige Verlängerung (12) besitzt, die in eine U-förmige Hinterschneidung (13) des Grundkörpers eingreift,
c) die außenseitige Abdeckung (3) mindestens auf der dem fensterseitigen Umfangsrand gegenüberliegenden Seite (15) des Umfangsrandes (8) einen Umbug (16) aufweist,
d) die innenseitige Abdeckung (4;23;27) in ihrem unteren Bereich (17) mit dem dem Türschweller (14) des entsprechenden Kraftfahrzeuges zugewandten Wandbereich (20) des Umbuges (14) der außenseitigen Abdeckung (3;21;26) mit Hilfe von Befestigungsmitteln (18;24;28) verbunden ist.

2. Kraftfahrzeugtür nach Anspruch 1, **dadurch gekennzeichnet,** daß es sich bei den Befestigungsmitteln (18;24) zur Befestigung der außenseitigen Abdeckung (3;21) an dem Grundkörper (2;22) bzw. der innenseitigen Abdeckung (4;23) um Clipse, Spreiznieten, Schrauben, Klettverbindungen, Schaumkleber Schnapphaken, Hinterhakungen, Schnappscharniere und/oder Rasthaken handelt.

3. Kraftfahrzeugtür nach Anspruch 1, **dadurch gekennzeichnet,** daß es sich bei dem Befestigungsmittel (28) zur Befestigung der außenseitigen Abdeckung (26) an dem Grundkörper bzw. der innenseitigen Abdeckung (27) um eine Einschubseele (28) handelt, wobei der Grundkörper bzw. die innenseitige Abdeckung (27) Ausnehmungen (31) aufweist, durch die in vorgegebenen Abständen gebogene Randbereiche (32) der außenseitigen Abdeckung (26) hindurchgreifen, und wobei die Einschubseele (28) die außenseitige Abdeckung (26) im Bereich der Ausnehmungen (31) zum Kraftfahrzeuginnenraum drückt und sich dabei an dem Grundkörper bzw. der innenseitigen Abdeckung (27) an entsprechenden stegförmigen Abstützelementen (33) abstützt.

## Claims

1. A motor vehicle door comprising a main body (2; 22) and an inner and an outer covering (4, 3; 23, 21; 27, 26), wherein
a) at least part of the circumferential edge (8) of the outer covering (3; 21; 26) in the region of the window has an undercut (10) in which a hook-shaped wall part (11) of the main body (2) engages,
b) the upper part (9) of the circumferential edge (8) has a flange-type extension (12) engaging in a U-shaped undercut (13) of the main body,
c) the outer covering (3) has a bend (16) at least on the part (15) of the circumferential edge (8) opposite the part in the region of the window,
d) the lower region (17) of the inner covering (4; 23; 27) is connected to the wall region (20) of the bend (16) of the outer covering (3; 21; 26) by fixing means (18; 24; 28), the wall region (20) facing the door sill (14) of the corresponding motor vehicle.

2. A motor vehicle door according to claim 1, characterised in that the fixing means (18; 24) for fixing the outer covering (3; 21) to the main body (2; 22) or the inner covering (4; 23) are clips, expanding rivets, bolts, hooked connectors, foam glue, snap hooks, back hooks, snap hinges and/or locking hooks.

3. A motor vehicle door according to claim 1, characterised in that the fixing means (28) for fixing the outer covering (26) to the main body or the inner covering (27) is an insertion core (28), wherein the main body or the inner covering (27) has recesses (31) through which bent edge regions (32) of the outer covering (26) extend at predetermined distances, and wherein the insertion core (28) pushes the outer covering (26) towards the interior of the motor vehicle in the region of the recesses (31) and, in so doing, is supported on corresponding flange-type supporting members (33) on the main body or the inner covering (27).

## Revendications

1. Porte de véhicule automobile, comprenant un corps de base (2 ; 22) et des revêtements côté intérieur et côté extérieur respectivement (4, 3 ; 23, 21 ; 27, 26), où
a) le bord périphérique côté fenêtre (8) du revêtement côté extérieur (3 ; 21 ; 26) présente au moins partiellement une contre-dépouille (10) dans laquelle est engagée une partie de paroi (11) en forme de crochet du corps de base (2),
b) le bord périphérique (8) possède, le long de son bord supérieur (9), un prolongement (12) en forme de nervure qui est engagé dans une contre-dépouille (13) en forme de U du corps de base,
c) le revêtement côté extérieur (3) présente un retour (16) au moins sur le côté (15) du bord périphérique (8) qui est à l'opposé du bord périphérique côté fenêtre,
d) le revêtement côté intérieur (4 ; 23 ; 27) est assemblé dans sa région inférieure (17) à la région de paroi (20) du retour (16) du revêtement côté extérieur (3 ; 21 ; 26) qui est dirigée vers le seuil de porte (14) du véhicule automobile correspondant, à l'aide de moyens de fixation (18; 24 ; 28).

2. Porte de véhicule automobile selon la revendication 1, caractérisée en ce que les moyens de fixation (18 ; 24) servant à la fixation du revêtement côté extérieur (3 ; 21) au corps de base (2 ; 22) ou au revêtement côté intérieur (4 ;23) sont constitués par des agrafes, des rivets à expansion, des vis, des assemblages par tissus auto-agrippants, une colle en mousse, des crochets à encliquetage, des accrochages arrière, des charnières à encliquetage et/ou des crochets d'arrêt.

3. Porte de véhicule automobile selon la revendication 1, caractérisée en ce que les moyens de fixation (28) servant à la fixation du revêtement côté extérieur (26) au corps de base ou au revêtement côté intérieur (27) sont constitués par une âme insérée (28), le corps de base ou le revêtement côté intérieur (27) présentant des évidements (31) à travers lesquels sont engagées, à des écartements prédéterminés, des régions de paroi recourbées (32) du revêtement côté extérieur (26), l'âme insérée (28) pressant le revêtement côté extérieur (26) vers le volume intérieur du véhicule automobile dans la région des évidements (31) et s'appuyant alors contre le corps de base ou contre le revêtement côté intérieur (27) au niveau d'éléments d'appui correspondants (33) en forme de nervures.
